(19) Europäisches Patentamt
European Patent Office
Office européen des brevets

(11) EP 4 596 627 A1

(12) EUROPEAN PATENT APPLICATION
published in accordance with Art. 153(4) EPC

(43) Date of publication:
06.08.2025 Bulletin 2025/32

(21) Application number: 23871581.7

(22) Date of filing: 23.08.2023

(51) International Patent Classification (IPC):
C08L 69/00 (2006.01) C08K 5/13 (2006.01)
C08K 5/49 (2006.01) C08L 25/12 (2006.01)
C08L 53/00 (2006.01) C08L 55/02 (2006.01)

(52) Cooperative Patent Classification (CPC):
C08K 5/13; C08K 5/49; C08L 25/12; C08L 53/00; C08L 55/02; C08L 69/00

(86) International application number:
PCT/JP2023/030245

(87) International publication number:
WO 2024/070340 (04.04.2024 Gazette 2024/14)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 27.09.2022 JP 2022153613

(71) Applicant: Teijin Limited
Osaka-shi, Osaka 530-0005 (JP)

(72) Inventor: ONISHI, Yousuke
Osaka-shi Osaka 530-0005 (JP)

(74) Representative: Kraus & Lederer PartGmbB
Thomas-Wimmer-Ring 15
80539 München (DE)

# (54) RESIN COMPOSITION AND MOLDED ARTICLE OF SAME

(57) The invention provides a resin composition having excellent impact resistance, fluidity, heat resistance, and good appearance of a molded article, and having a high effect of suppressing tape peeling from the surface of a molded article. The invention is a resin composition, containing: 0.5 to 10 parts by weight of (C) an acrylic block copolymer (component C); 0.01 to 3.0 parts by weight of (D) a phosphorus antioxidant (component D); and 0.01 to 3.0 parts by weight of (E) a hindered phenol antioxidant (component E) relative to 100 parts by weight of a resin component composed of 45 to 90 parts by weight of (A) a polycarbonate resin (component A) and 10 to 55 parts by weight of (B) a copolymer obtained by polymerizing an aromatic vinyl monomer and a vinyl cyanide monomer (component B).

EP 4 596 627 A1

## Description

### Technical Field

The present invention relates to a resin composition and a molded article thereof, and more specifically relates to a resin composition having excellent impact resistance, fluidity, heat resistance, and good appearance of a molded article, and having a high effect of suppressing tape peeling from the surface of a molded article and a molded article thereof.

### Background Art

Polycarbonate resins have excellent mechanical properties and thermal properties and are therefore used in a variety of uses, primarily in the automotive field, the office automation equipment field, the electronic/electrical equipment field and the like. Alloy resins in which an ABS resin or an AS resin is blended with a polycarbonate resin are used in uses such as automobile parts, printer parts, personal computer casings, and computer parts, taking advantage of the excellent fluidity. In recent years, particularly in the automotive field, the use of alloy resins in which an ABS resin is blended with a polycarbonate resin has been increasing. However, there is a problem that the blending of an ABS resin impairs the excellent mechanical properties, particularly impact resistance, inherent to the polycarbonate resin. Therefore, so far, studies have been made to improve impact resistance. As a method for improving the impact resistance of resin materials, for example, a method of blending an impact modifier such as a graft polymer with an alloy resin in which an ABS resin is blended with a polycarbonate resin has been disclosed (see Patent Literature 1) .However, though this method improves the impact resistance, it has a problem of impairing the fluidity. As a method for improving both impact resistance and fluidity, for example, a method of blending an acrylic block copolymer with an alloy resin in which an ABS resin is blended with a polycarbonate resin has been also disclosed (see Patent Literature 2) .However, this method has problems such as poor appearance of the molded article and tape peeling from the surface of the molded article.

### Citation List

### Patent Literatures

PTL 1: JP2009-203269A
PTL 2: JP2020-164774A

### Summary of Invention

### Technical Problem

An object of the invention is to provide a resin composition having excellent impact resistance, fluidity, heat resistance, and good appearance of a molded article, and having a high effect of suppressing tape peeling from the surface of a molded article and a molded article thereof.

### Solution to Problem

As a result of intensive studies to solve the above problems, the present inventors have found that by adding an acrylic block copolymer, a phosphorus antioxidant, and a hindered phenol antioxidant to a resin component composed of a polycarbonate resin and a copolymer obtained by polymerizing an aromatic vinyl monomer and a vinyl cyanide monomer, a resin composition having excellent impact resistance, fluidity, heat resistance, and good appearance of a molded article, and having a high effect of suppressing tape peeling from the surface of a molded article and a molded article thereof can be obtained.

That is, the invention is as follows:

1. A resin composition, including: 0.5 to 10 parts by weight of (C) an acrylic block copolymer (component C); 0.01 to 3.0 parts by weight of (D) a phosphorus antioxidant (component D); and 0.01 to 3.0 parts by weight of (E) a hindered phenol antioxidant (component E) relative to 100 parts by weight of a resin component composed of 45 to 90 parts by weight of (A) a polycarbonate resin (component A) and 10 to 55 parts by weight of (B) a copolymer obtained by polymerizing an aromatic vinyl monomer and a vinyl cyanide monomer (component B).
2. The resin composition according to item 1 above, wherein the component C is an acrylic block copolymer containing

a polymer block containing an acrylic ester monomer unit and a polymer block containing a methacrylic ester monomer unit.

3. The resin composition according to item 2 above, wherein a content of the polymer block containing a methacrylic ester monomer unit in the component C is 25% by weight or more in all blocks.
4. The resin composition according to any of items 1 to 3 above, wherein the component B is an ABS resin.
5. A molded article made of the resin composition according to any of items 1 to 4 above.
6. The molded article according to item 5 above, which is an automobile part.

Advantageous Effects of Invention

The resin composition of the invention has excellent impact resistance, fluidity, heat resistance, and good appearance of a molded article, and has a high effect of suppressing tape peeling from the surface of a molded article, thus can be suitably used as parts in the automotive field, the office automation equipment field, the home appliance field, the electronic/electrical field and the like, and is particularly suitable for an automobile part, and the industrial effects thereof are exceptional.

Description of Embodiments

Each of the components of the invention will be described in detail below.

(Component A: polycarbonate resin)

The polycarbonate resin used in the invention is one obtained by reacting a dihydric phenol with a carbonate precursor. Examples of the reaction method include interfacial polymerization, melt transesterification, solid phase transesterification of a carbonate prepolymer, and ring-opening polymerization of a cyclic carbonate compound.

Typical examples of the dihydric phenol used herein include hydroquinone, resorcinol, 4,4'-biphenol, 1,1-bis(4-hydroxyphenyl)ethane, 2,2-bis(4-hydroxyphenyl)propane (commonly known as bisphenol A), 2,2-bis(4-hydroxy-3-methylphenyl) propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl)ester, bis(4-hydroxy-3-methylphenyl)sulfide, 9,9-bis(4-hydroxyphenyl)fluorene, and 9,9-bis(4-hydroxy-3-methylphenyl)fluorene. The preferred dihydric phenols are bis(4-hydroxyphenyl)alkanes, and among them, bisphenol A is particularly preferred from the viewpoint of impact resistance and is versatilely used.

In the invention, in addition to bisphenol A polycarbonate resins, which are versatilely used polycarbonate resins, particular polycarbonate resins produced using other dihydric phenols can be used as the component A. For example, polycarbonate resins (homopolymers or copolymers) in which 4,4'-(m-phenylenediisopropylidene)diphenol (hereinafter may be abbreviated as "BPM"), 1,1-bis(4-hydroxyphenyl)cyclohexane, 1,1-bis(4-hydroxyphenyl)-3,3,5-trimethylcyclohexane (hereinafter may be abbreviated as "Bis-TMC"), 9,9-bis(4-hydroxyphenyl)fluorene, and 9,9-bis(4-hydroxy-3-methylphenyl) fluorene (hereinafter may be abbreviated as "BCF") are used as a part or all of the dihydric phenol component are suitable for uses where requirements for dimensional change due to water absorption and form stability are particularly strict. These dihydric phenols other than BPA are preferably used in an amount of 5% by mol or more, particularly 10% by mol or more based on the total dihydric phenol component that constitutes the polycarbonate resin. In particular, when high rigidity and better hydrolysis resistance are required, the component A that constitutes the resin composition is particularly suitably a copolymeric polycarbonate resin of the following (1) to (3).

(1) A copolymeric polycarbonate resin in which BPM is 20 to 80% by mol (more suitably 40 to 75% by mol, further suitably 45 to 65% by mol) and BCF is 20 to 80% by mol (more suitably 25 to 60% by mol, further suitably 35 to 55% by mol) in 100% by mol of the dihydric phenol components that constitute the polycarbonate resin.
(2) A copolymeric polycarbonate resin in which BPM is 10 to 95% by mol (more suitably 50 to 90% by mol, further suitably 60 to 85% by mol) and BCF is 5 to 90% by mol (more suitably 10 to 50% by mol, further suitably 15 to 40% by mol) in 100% by mol of the dihydric phenol components that constitute the polycarbonate resin.
(3) A copolymeric polycarbonate resin in which BPM is 20 to 80% by mol (more suitably 40 to 75% by mol, and further suitably 45 to 65% by mol) and Bis-TMC is 20 to 80% by mol (more suitably 25 to 60% by mol, and further suitably 35 to 55% by mol) in 100% by mol of the dihydric phenol components that constitute the polycarbonate resin.

These particular polycarbonate resins can be used alone or as an appropriate mixture of two or more kinds.

These can be also used in combination with a versatilely used bisphenol A type polycarbonate resin. The production methods and properties of these particular polycarbonate resins are described in detail in, for example, JPH06-172508A, JPH08-27370A, JP2001-55435A, and JP2002-117580A.

Among the various polycarbonate resins above, those having a water absorption rate and a glass transition temperature (Tg) within the following ranges by adjustment of the copolymer composition and the like have good hydrolysis resistance of the polymer itself and are remarkably excellent in low warpage after molding, and thus are particularly suitable in fields where form stability is required.

(i) a polycarbonate resin having a water absorption rate of 0.05 to 0.15%, preferably 0.06 to 0.13%, and a Tg of 120 to 180°C; or
(ii) a polycarbonate resin having a Tg of 160 to 250°C, preferably 170 to 230°C, and a water absorption rate of 0.10 to 0.30%, preferably 0.13 to 0.30%, more preferably 0.14 to 0.27%.

Herein, the water absorption rate of polycarbonate resin is a value obtained by immersing a disk-shaped specimen having a diameter of 45 mm and a thickness of 3.0 mm in water at 23°C for 24 hours and then measuring the water absorption rate in accordance with ISO 62-1980. The glass transition temperature (Tg) is a value obtained by differential scanning calorimetry (DSC) in accordance with JIS K7121.

As a carbonate precursor, a carbonyl halide, a carbonic acid diester, a haloformate or the like is used, and specific examples thereof include phosgene, diphenyl carbonate, and a dihaloformate of a dihydric phenol.

In the production of a polycarbonate resin by interfacial polymerization of the dihydric phenol and the carbonate precursor, a catalyst, a terminal stopping agent, an antioxidant for preventing oxidation of the dihydric phenol and the like can be used as necessary. The polycarbonate resin of the invention also includes a branched polycarbonate resin in which trifunctional or higher polyfunctional aromatic compounds are copolymerized, a polyester carbonate resin in which aromatic or aliphatic (including alicyclic) difunctional carboxylic acids are copolymerized, a copolymeric polycarbonate resin in which difunctional alcohols (including alicyclic alcohols) are copolymerized, and a polyester carbonate resin in which such difunctional carboxylic acids and difunctional alcohols are copolymerized. The polycarbonate resin can be a mixture of two or more kinds of the obtained polycarbonate resins.

The branched polycarbonate resin can impart drip prevention performance and the like to the resin composition of the invention. Examples of the trifunctional or higher polyfunctional aromatic compounds used in such a branched polycarbonate resin include phloroglucine, phloroglucide, or trisphenols such as 4,6-dimethyl-2,4,6-tris(4-hydroxyphenyl) heptene-2, 2,4,6-trimethyl-2,4,6-tris(4-hydroxyphenyl) heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, and 4-{4-[1,1-bis(4-hydroxyphenyl)ethyl]benzene}-$\alpha$,$\alpha$-dimethylbenzylphenol, tetra (4-hydroxyphenyl) methane, bis(2,4-dihydroxyphenyl) ketone, 1,4-bis(4,4-dihydroxytriphenylmethyl)benzene, or trimellitic acid, pyromellitic acid, benzophenonetetracarboxylic acid, and acid chlorides thereof, among these, 1,1,1-tris(4-hydroxyphenyl)ethane and 1,1,1-tris(3,5-dimethyl-4-hydroxyphenyl)ethane are preferred, and 1,1,1-tris(4-hydroxyphenyl)ethane is particularly preferred.

The percentage of the constitutional unit derived from the polyfunctional aromatic compound in the branched polycarbonate resin is preferably 0.01 to 1% by mol, more preferably 0.05 to 0.9% by mol, further preferably 0.05 to 0.8% by mol in total 100% by mol of the constitutional unit derived from a dihydric phenol and the constitutional unit derived from such a polyfunctional aromatic compound. In particular, in the case of the melt transesterification, a branched structural unit may be produced as a side reaction, and the amount of such a branched structural unit is preferably 0.001 to 1% by mol, more preferably 0.005 to 0.9% by mol, further preferably 0.01 to 0.8% by mol in 100% by mol in total with the constitutional unit derived from a dihydric phenol. The percentage of such a branched structure can be calculated by $^1$H-NMR measurement.

The aliphatic difunctional carboxylic acid is preferably an $\alpha$,$\omega$-dicarboxylic acid. Preferred examples of the aliphatic difunctional carboxylic acid include linear saturated aliphatic dicarboxylic acids such as sebacic acid (decanedioic acid), dodecanedioic acid, tetradecanedioic acid, octadecanedioic acid, and icosanedioic acid, and alicyclic dicarboxylic acids such as cyclohexanedicarboxylic acid. As the difunctional alcohol, an alicyclic diol is more suitable, and examples thereof include cyclohexanedimethanol, cyclohexanediol, and tricyclodecane dimethanol.

The reaction modes of interfacial polymerization, melt transesterification, solid phase transesterification of a carbonate prepolymer, ring-opening polymerization of a cyclic carbonate compound and the like, which are the methods for producing the polycarbonate resin of the invention, are methods well known in various literatures, patent publications and the like.

In the production of the polycarbonate resin composition of the invention, though the viscosity average molecular weight (M) of the polycarbonate resin is not particularly limited, it is preferably $1.8 \times 10^4$ to $4.0 \times 10^4$, more preferably $2.0 \times 10^4$ to $3.5 \times 10^4$, further preferably $2.2 \times 10^4$ to $3.0 \times 10^4$. When the polycarbonate resin has a viscosity average molecular weight of less than $1.8 \times 10^4$, good mechanical properties may not be obtained. Meanwhile, a resin composition obtained from a polycarbonate resin having a viscosity average molecular weight of more than $4.0 \times 10^4$ is inferior in versatility from

the viewpoint of poor fluidity during injection molding.

The polycarbonate resin can be one obtained by mixing polycarbonate resins having a viscosity average molecular weight outside the above range. In particular, a polycarbonate resin having a viscosity average molecular weight of more than the above range ($5 \times 10^4$) improves entropy elasticity of the resin. As a result, good molding processability is exhibited in gas assisted molding and foam molding, which may be used when molding reinforced resin materials into structural members. Such improvement in molding processability is even better than that of the branched polycarbonate resin. In a more suitable embodiment, a polycarbonate resin (component A-1) (hereinafter, may be referred to as a "high molecular weight component-containing polycarbonate resin") in which the component A is composed of a polycarbonate resin (component A-1-1) having a viscosity average molecular weight of $7 \times 10^4$ to $3 \times 10^5$ and an aromatic polycarbonate resin (component A-1-2) having a viscosity average molecular weight of $1 \times 10^4$ to $3 \times 10^4$ and the viscosity average molecular weight is $1.6 \times 10^4$ to $3.5 \times 10^4$ can be also used.

In such a high molecular weight component-containing polycarbonate resin (component A-1), the molecular weight of the component A-1-1 is preferably $7 \times 10^4$ to $2 \times 10^5$, more preferably $8 \times 10^4$ to $2 \times 10^5$, further preferably $1 \times 10^5$ to $2 \times 10^5$, particularly preferably $1 \times 10^5$ to $1.6 \times 10^5$. The molecular weight of the component A-1-2 is preferably $1 \times 10^4$ to $2.5 \times 10^4$, more preferably $1.1 \times 10^4$ to $2.4 \times 10^4$, further preferably $1.2 \times 10^4$ to $2.4 \times 10^4$, particularly preferably $1.2 \times 10^4$ to $2.3 \times 10^4$.

The high molecular weight component-containing polycarbonate resin (component A-1) can be obtained by mixing the component A-1-1 and the component A-1-2 in various ratios and making adjustment to satisfy a predetermined molecular weight range. The percentage of the component A-1-1 is preferably 2 to 40% by weight, the percentage of the component A-1-1 is more preferably 3 to 30% by weight, the percentage of the component A-1-1 is further preferably 4 to 20% by weight, and the percentage of the component A-1-1 is particularly preferably 5 to 20% by weight in 100% by weight of the component A-1.

Examples of the method for preparing the component A-1 include (1) a method in which the component A-1-1 and the component A-1-2 are independently polymerized and mixed, (2) a method in which the method of producing an aromatic polycarbonate resin that exhibits multiple polymer peaks in a molecular weight distribution chart by GPC method in the same system, which is typified by the method shown in JPH05-306336A, is used and such an aromatic polycarbonate resin is produced to satisfy the conditions of the component A-1 of the invention, and (3) a method in which an aromatic polycarbonate resin obtained by such a production method (production method (2)) and the component A-1-1 and/or the component A-1-2 produced separately are mixed.

The viscosity average molecular weight in the invention is determined as follows: the specific viscosity ($\eta_{SP}$) calculated by the following formula is first determined using an Ostwald viscometer from a solution in which 0.7 g of a polycarbonate resin is dissolved in 100 ml of methylene chloride at 20°C

$$\text{Specific viscosity } (\eta_{SP}) = (t - t_0)/t_0$$

[$t_0$ is the number of seconds of methylene chloride dropping, and t is the number of seconds of the sample solution dropping]
and the viscosity average molecular weight M is calculated by the following formula from the determined specific viscosity ($\eta_{SP}$).

$\eta_{SP}/c = [\eta] + 0.45 \times [\eta]^2 c$ (where $[\eta]$ is the intrinsic viscosity)

$$[\eta] = 1.23 \times 10^{-4} M^{0.83}$$

$$c = 0.7$$

The viscosity average molecular weight of the polycarbonate resin in the polycarbonate resin composition of the invention is calculated as follows. That is, the composition is mixed with methylene chloride in an amount 20 to 30 times by weight of the composition to dissolve the soluble matter in the composition. The soluble matter is collected by Celite filtration. Then, the solvent in the obtained solution is removed. The solid after removing the solvent is thoroughly dried to obtain a solid of the component that is soluble in methylene chloride. The specific viscosity at 20°C is determined in the same manner as above from the solution in which 0.7 g of this solid is dissolved in 100 ml of methylene chloride, and the viscosity average molecular weight M is calculated from the specific viscosity in the same manner as above.

As the polycarbonate resin of the invention, a polycarbonate-polydiorganosiloxane copolymer resin can be also used. The polycarbonate-polydiorganosiloxane copolymer resin is preferably a copolymeric resin prepared by copolymerizing a dihydric phenol represented by the following general formula (1) and a hydroxyaryl-terminated polydiorganosiloxane represented by the following general formula (3).

[Chemical formula 1]

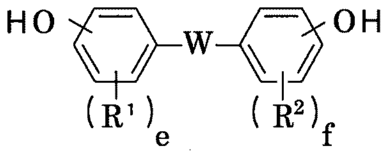

··· (1)

[wherein $R^1$ and $R^2$ each independently represent a group selected from the group consisting of a hydrogen atom, a halogen atom, an alkyl group having 1 to 18 carbon atoms, an alkoxy group having 1 to 18 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 14 carbon atoms, an aralkyl group having 7 to 20 carbon atoms, an aralkyloxy group having 7 to 20 carbon atoms, a nitro group, an aldehyde group, a cyano group, and a carboxy group, when there are multiple $R^1$'s and $R^2$'s, each $R^1$ and each $R^2$ may be the same or different, e and f are each an integer of 1 to 4, and W is a single bond or at least one group selected from the group consisting of groups represented by the following general formulas (2).]

[Chemical formula 2]

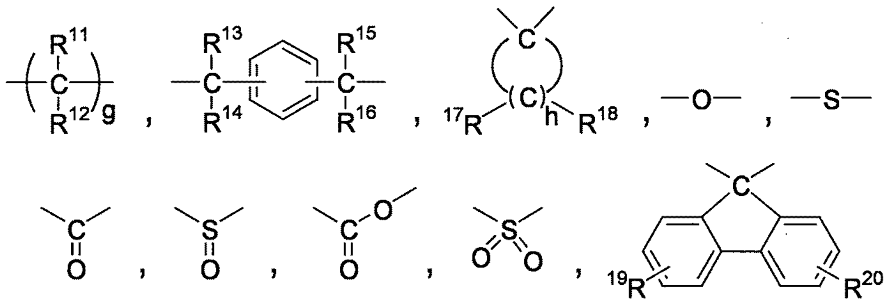

··· (2)

[wherein $R^{11}$, $R^{12}$, $R^{13}$, $R^{14}$, $R^{15}$, $R^{16}$, $R^{17}$, and $R^{18}$ each independently represent a group selected from the group consisting of a hydrogen atom, an alkyl group having 1 to 18 carbon atoms, an aryl group having 6 to 14 carbon atoms, and an aralkyl group having 7 to 20 carbon atoms, $R^{19}$ and $R^{20}$ each independently represent a group selected from the group consisting of a hydrogen atom, a halogen atom, an alkyl group having 1 to 18 carbon atoms, an alkoxy group having 1 to 10 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 10 carbon atoms, an aralkyl group having 7 to 20 carbon atoms, an aralkyloxy group having 7 to 20 carbon atoms, a nitro group, an aldehyde group, a cyano group, and a carboxy group, and when there are multiple $R^{11}$'s, $R^{12}$'s, $R^{13}$'s, $R^{14}$'s, $R^{15}$'s, $R^{16}$'s, $R^{17}$'s, $R^{18}$'s, $R^{19}$'s, and $R^{20}$'s, each $R^{11}$, $R^{12}$, $R^{13}$, $R^{14}$, $R^{15}$, $R^{16}$, $R^{17}$, $R^{18}$, $R^{19}$, and $R^{20}$ may be the same or different, g is an integer of 1 to 10, and h is an integer of 4 to 7.]

[Chemical formula 3]

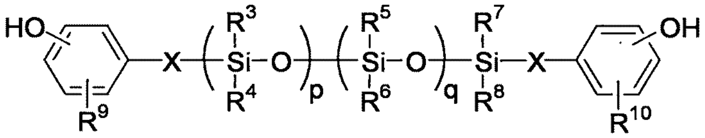

··· (3)

[wherein $R^3$, $R^4$, $R^5$, $R^6$, $R^7$, and $R^8$ each independently represent a hydrogen atom, an alkyl group having 1 to 12 carbon atoms, or a substituted or unsubstituted aryl group having 6 to 12 carbon atoms, $R^9$ and $R^{10}$ each independently represent a hydrogen atom, a halogen atom, an alkyl group having 1 to 10 carbon atoms, or an alkoxy group having 1 to 10 carbon

atoms, p is a natural number, q is 0 or a natural number, and p + q is a natural number of 10 to 300. X is a divalent aliphatic group having 2 to 8 carbon atoms.]

Examples of the dihydric phenol (I) represented by the general formula (1) include 4,4'-dihydroxybiphenyl, bis(4-hydroxyphenyl) methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl) propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl) propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl) fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol, and 1,3-bis(4-hydroxyphenyl)-5,7-dimethyladamantane.

Among these, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, and 1,4-bis{2-(4-hydroxyphenyl)propyl}benzene are preferred, and in particular, 2,2-bis(4-hydroxyphenyl)propane, 1,1-bis(4-hydroxyphenyl)cyclohexane (BPZ), 4,4'-sulfonyldiphenol, and 9,9-bis(4-hydroxy-3-methylphenyl)fluorene are preferred. Among these, 2,2-bis(4-hydroxyphenyl)propane is most suitable, which has excellent strength and good durability. These can be used alone or in combination of two or more kinds.

As the hydroxyaryl-terminated polydiorganosiloxane represented by the general formula (3), for example, the compounds shown below are suitably used.

[Chemical formula 4]

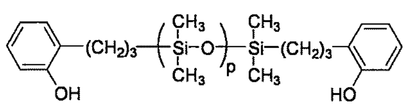
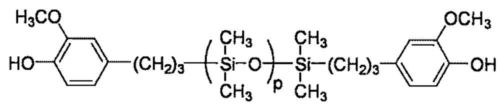
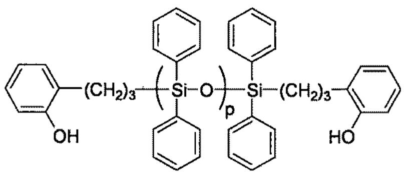
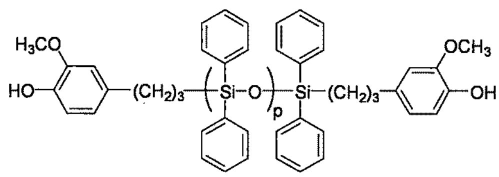
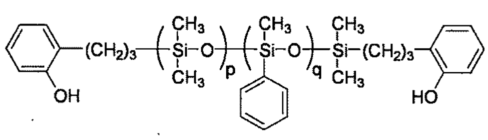
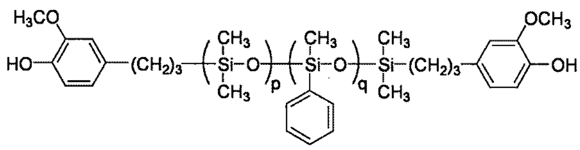
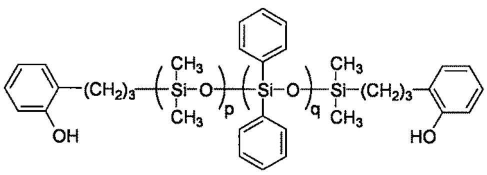
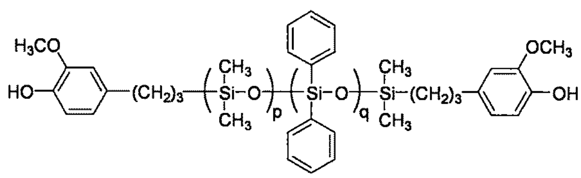

The hydroxyaryl-terminated polydiorganosiloxane (II) is easily produced by subjecting a phenol having an olefinic unsaturated carbon-carbon bond, suitably vinylphenol, 2-allylphenol, isopropenylphenol, 2-methoxy-4-allylphenol, to hydrosilylation reaction to the end of a polysiloxane chain having a predetermined degree of polymerization. Among these, (2-allylphenol)-terminated polydiorganosiloxane and (2-methoxy-4-allylphenol)-terminated polydiorganosiloxane are preferred, and in particular, (2-allylphenol)-terminated polydimethylsiloxane and (2-methoxy-4-allylphenol)-terminated polydimethylsiloxane are preferred. The hydroxyaryl-terminated polydiorganosiloxane (II) preferably has a molecular weight distribution (Mw/Mn) of 3 or less. To exhibit even better low outgassing properties during high-temperature

molding and low-temperature impact properties, the molecular weight distribution (Mw/Mn) is more preferably 2.5 or less, further preferably 2 or less. When the molecular weight distribution is more than the upper limit of such a suitable range, the produced amount of outgas during high-temperature molding may be large, and low-temperature impact properties may be poor.

To achieve high impact resistance, the degree of polymerization of diorganosiloxane of the hydroxyaryl-terminated polydiorganosiloxane (II) (p + q) is suitably 10 to 300. Such a degree of polymerization of diorganosiloxane (p + q) is preferably 10 to 200, more preferably 12 to 150, further preferably 14 to 100. When the degree of polymerization is less than the lower limit of such a suitable range, the impact resistance that is a characteristic of the polycarbonate-polydiorganosiloxane copolymer is not effectively exhibited, and when the degree of polymerization is more than the upper limit of such a preferred range, the appearance becomes poor.

The content of polydiorganosiloxane based on the total weight of the polycarbonate-polydiorganosiloxane copolymer resin used in the component A is preferably 0.1 to 50% by weight. Such a content of the polydiorganosiloxane component is more preferably 0.5 to 30% by weight, further preferably 1 to 20% by weight. When the content is not less than the lower limit of such a preferred range, the impact resistance and fire retardance are excellent, and when the content is not more than the upper limit of such a suitable range, a stable appearance that is less influenced by molding conditions is easily obtained. Such a degree of polymerization of the polydiorganosiloxane and the content of the polydiorganosiloxane can be calculated by $^1$H-NMR measurement.

In the invention, the hydroxyaryl-terminated polydiorganosiloxane (II) can be used alone or in combination of two or more kinds.

A comonomer other than the dihydric phenol (I) and the hydroxyaryl-terminated polydiorganosiloxane (II) can be used in combination within the range of up to 10% by weight based on the total weight of the copolymers as long as the invention is not impaired.

In the invention, a mixed solution containing an oligomer having a terminal chloroformate group is prepared in advance by reaction of the dihydric phenol (I) and a carbonic acid ester-forming compound in a mixed liquor of a water-insoluble organic solvent and an alkali aqueous solution.

In the production of an oligomer of the dihydric phenol (I), the whole quantity of the dihydric phenol (I) used in the method of the invention can be converted into oligomers at once, or a part thereof can be added as a later-added monomer to the subsequent interfacial polycondensation reaction as a reaction raw material. The later-added monomer is added to facilitate the subsequent polycondensation reaction, and there is no need to add it if it is not necessary.

The method for this oligomer formation reaction is not particularly limited, but a method in which the reaction is performed in a solvent in the presence of an acid binder is generally suitable.

The percentage of the carbonic acid ester-forming compound used can be appropriately adjusted in consideration of the stoichiometric ratio (equivalent) of the reaction. When a gaseous carbonic acid ester-forming compound such as phosgene is used, a method of blowing this into the reaction system can be suitably employed.

As the acid binder, for example, alkali metal hydroxides such as sodium hydroxide and potassium hydroxide, alkali metal carbonates such as sodium carbonate and potassium carbonate, organic bases such as pyridine, or mixtures of these are used. The percentage of the acid binder used can be also appropriately determined in consideration of the stoichiometric ratio (equivalent) of the reaction, same as above. Specifically, 2 equivalents or a slight excess of the acid binder relative to the number of moles of the dihydric phenol (I) used to form the oligomer (1 mole usually corresponds to 2 equivalents) is preferably used.

As the solvent, various solvents inert to the reaction such as those used in the production of known polycarbonates can be used alone or a mixed solvent. Typical examples include hydrocarbon solvents such as xylene, and halogenated hydrocarbon solvents such as methylene chloride and chlorobenzene. In particular, halogenated hydrocarbon solvents such as methylene chloride are suitably used.

The reaction pressure for oligomer formation is not particularly limited, and can be normal pressure, elevated pressure, or reduced pressure, but the reaction is usually advantageously performed under normal pressure. The reaction temperature is selected from the range of - 20 to 50°C, in many cases, the polymerization generates heat, and thus cooling with water or ice is desirably performed. The reaction time depends on other conditions and cannot be generally defined, but is usually 0.2 to 10 hours. The pH range of the oligomer formation reaction is same as that of known interfacial reactions, and the pH is always adjusted to 10 or more.

In the invention, after obtaining a mixed solution containing an oligomer of the dihydric phenol (I) having a terminal chloroformate group in this manner, the hydroxyaryl-terminated polydiorganosiloxane (II) represented by the general formula (3) which has been highly refined to a molecular weight distribution (Mw/Mn) of 3 or less is added to the dihydric phenol (I) while stirring the mixed solution, and the hydroxyaryl-terminated polydiorganosiloxane (II) and the oligomer are subjected to interfacial polycondensation to obtain a polycarbonate-polydiorganosiloxane copolymer.

[Chemical formula 5]

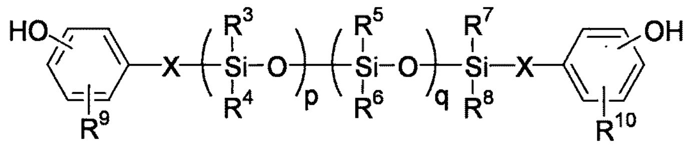

... (3)

[wherein $R^3$, $R^4$, $R^5$, $R^6$, $R^7$, and $R^8$ represent each independently a hydrogen atom, an alkyl group having 1 to 12 carbon atoms, or a substituted or unsubstituted aryl group having 6 to 12 carbon atoms, $R^9$ and $R^{10}$ represent each independently a hydrogen atom, a halogen atom, an alkyl group having 1 to 10 carbon atoms, or an alkoxy group having 1 to 10 carbon atoms, p is a natural number, q is 0 or a natural number, and p + q is a natural number of 10 to 300. X is a divalent aliphatic group having 2 to 8 carbon atoms.]

When the interfacial polycondensation reaction is performed, an acid binder can be appropriately added in consideration of the stoichiometric ratio (equivalent) of the reaction. As the acid binder, for example, alkali metal hydroxides such as sodium hydroxide and potassium hydroxide, alkali metal carbonates such as sodium carbonate and potassium carbonate, organic bases such as pyridine, or mixtures of these are used. Specifically, when the hydroxyaryl-terminated polydiorganosiloxane (II) used or a part of the dihydric phenol (I) as a later-added monomer as described above is added to this reaction stage, 2 equivalents or more of an alkali relative to the total number of moles of the later-added dihydric phenol (I) and the hydroxyaryl-terminated polydiorganosiloxane (II) (1 mole usually corresponds to 2 equivalents) are preferably used.

The polycondensation by the interfacial polycondensation reaction between the oligomer of the dihydric phenol (I) and the hydroxyaryl-terminated polydiorganosiloxane (II) is performed by vigorously stirring the mixed liquor.

In such a polymerization reaction, a terminal stopping agent or a molecular weight modifier is usually used. Examples of the terminal stopping agent include a compound having a monovalent phenolic hydroxyl group, and examples thereof include, in addition to ordinary phenols, p-tertbutylphenol, p-cumylphenol, and tribromophenol, a long-chain alkylphenol, an aliphatic carboxylic acid chloride, an aliphatic carboxylic acid, a hydroxybenzoic acid alkyl ester, a hydroxyphenyl alkyl acid ester, and an alkyl ether phenol. The amount used thereof is in the range of 100 to 0.5 moles, preferably 50 to 2 moles relative to 100 moles of the total dihydric phenol compounds used, and using two or more kinds of compounds in combination is of course possible.

To promote the polycondensation reaction, a catalyst such as a tertiary amine, such as triethylamine, or a quaternary ammonium salt can be added.

The reaction time for such a polymerization reaction is preferably 30 minutes or more, further preferably 50 minutes or more. If desired, a small amount of an antioxidant such as sodium sulfite or a hydrosulfide can be added.

A branching agent can be used in combination with the dihydric phenol compound to form a branched polycarbonate-polydiorganosiloxane copolymer resin. Examples of the trifunctional or higher polyfunctional aromatic compound used in such a branched polycarbonate-polydiorganosiloxane copolymer resin include phloroglucine, phloroglucide, or trisphenols such as 4,6-dimethyl-2,4,6-tris(4-hydroxyphenyl)heptene-2,2,4,6-trimethyl-2,4,6-tris(4-hydroxyphenyl) heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, and 4-{4-[1,1-bis(4-hydroxyphenyl)ethyl] benzene}-α,α-dimethylbenzylphenol, tetra (4-hydroxyphenyl) methane, bis(2,4-dihydroxyphenyl) ketone, 1,4-bis(4,4-dihydroxytriphenylmethyl)benzene, or trimellitic acid, pyromellitic acid, benzophenonetetracarboxylic acid, and acid chlorides thereof, among these, 1,1,1-tris(4-hydroxyphenyl)ethane and 1,1,1-tris(3,5-dimethyl-4-hydroxyphenyl) ethane are preferred, and 1,1,1-tris(4-hydroxyphenyl)ethane is particularly preferred. The percentage of the polyfunctional compound in the branched polycarbonate-polydiorganosiloxane copolymer resin is preferably 0.001 to 1% by mol, more preferably 0.005 to 0.39% by mol, further preferably 0.01 to 0.8% by mol, particularly preferably 0.05 to 0.4% by mol in the whole quantity of the polycarbonate-polydiorganosiloxane copolymer resin. The amount of branched structures can be calculated by $^1$ H-NMR measurement.

The reaction pressure can be reduced pressure, normal pressure, or increased pressure, but the reaction can be usually suitably performed under normal pressure or the self-pressure level of the reaction system. The reaction temperature is selected from the range of - 20 to 50°C, in many cases, the polymerization generates heat, and thus cooling with water or ice is desirably performed. The reaction time depends on other conditions such as the reaction temperature and cannot be generally defined, but is usually 0.5 to 10 hours.

In some cases, the obtained polycarbonate-polydiorganosiloxane copolymer resin can be appropriately subjected to a physical treatment (mixing, fractionation and the like) and/or a chemical treatment (polymer reaction, crosslinking treatment, partial decomposition treatment and the like) to obtain a polycarbonate-polydiorganosiloxane copolymer resin having a desired reduced viscosity [$\eta_{SP}$/c].

The obtained reaction product (crude product) can be subjected to various post-treatments such as a known separation and refinement method to recover a polycarbonate-polydiorganosiloxane copolymer resin having a desired purity (degree of refinement).

The average size of the polydiorganosiloxane domain in the polycarbonate-polydiorganosiloxane copolymer resin molded article is preferably in the range of 1 to 60 nm. The average size is more preferably 3 to 55 nm, further preferably 5 to 50 nm. When the size is less than the lower limit of such a suitable range, the impact resistance and fire retardance may not be sufficiently exhibited, and when the size is more than the upper limit of such a suitable range, the impact resistance may not be stably exhibited. (Component B: Copolymer obtained by polymerizing aromatic vinyl monomer and vinyl cyanide monomer)

The component B of the invention is a copolymer obtained by polymerizing an aromatic vinyl monomer and a vinyl cyanide monomer, and is preferably a copolymer obtained by polymerizing an aromatic vinyl monomer, a vinyl cyanide monomer, and a diene rubber polymer. The component B preferably contains 40 to 90% by weight of an aromatic vinyl monomer, 10 to 50% by weight of a vinyl cyanide monomer, and 0 to 50% by weight of other polymers or monomers.

Examples of the aromatic vinyl monomer include styrene, α-methylstyrene, o-methylstyrene, p-methylstyrene, vinylxylene, ethylstyrene, dimethylstyrene, p-tert-butylstyrene, vinylnaphthalene, methoxystyrene, monobromostyrene, dibrompostyrene, fluorostyrene, and tribromostyrene, and styrene is particularly preferred. Regarding the percentage of the aromatic vinyl monomer in the component B, the lower limit is more preferably 45% by weight, further preferably 50% by weight, particularly preferably 55% by weight, and the upper limit is more preferably 75% by weight, further preferably 70% by weight, particularly preferably 65% by weight in 100% by weight of the component B.

Examples of the vinyl cyanide monomer include acrylonitrile and methacrylonitrile, and acrylonitrile is particularly preferred. Regarding the percentage of the vinyl cyanide monomer in the component B, the lower limit is more preferably 12% by weight, further preferably 14% by weight, particularly preferably 15% by weight, and the upper limit is more preferably 28% by weight, further more preferably 26% by weight, particularly preferably 25% by weight in 100% by weight of the component B.

Further, a copolymer of other polymers or monomers copolymerizable with these can be also used, in this case, examples of the copolymerizable polymers include diene rubber polymers in which a rubber component such as polybutadiene, polyisoprene, or a styrene-butadiene copolymer is used, and examples of the other copolymerizable monomers include maleimide monomers such as maleimide, N-methylmaleimide, N-cyclohexylmaleimide, and N-phenylmaleimide, acrylamide monomers such as acrylamide and N-methylacrylamide, unsaturated acid anhydrides such as maleic anhydride and itaconic anhydride, unsaturated acids such as acrylic acid and methacrylic acid, glycidyl acrylate, glycidyl methacrylate, 2-hydroxyethyl acrylate, 2-hydroxyethyl methacrylate, and methoxypolyethylene glycol methacrylate. Regarding the percentage of other monomers in the component B, the upper limit is more preferably 40% by weight, further preferably 30% by weight in 100% by weight of the component B.

Specific preferred examples of the component B include an acrylonitrile-styrene copolymer, an acrylonitrile-butadiene-styrene copolymer, an acrylonitrile-butadiene-styrene-α-methylstyrene copolymer, and an acrylonitrile-butadiene-styrene-N-phenylmaleimide copolymer, and among these, an acrylonitrile-butadiene-styrene copolymer is preferred. These copolymers can be used alone or in combination of two or more kinds.

The component B can be produced by any of the polymerization methods of bulk polymerization, solution polymerization, suspension polymerization, and emulsion polymerization, and the copolymerization method can be one-stage graft polymerization or multi-stage graft polymerization. The component B can be a mixture with a copolymer of only the graft component produced as a byproduct during the production.

The content of the component B is 10 to 55 parts by weight, preferably 15 to 45 parts by weight, more preferably 20 to 35 parts by weight in 100 parts by weight of the resin component composed of the component A and the component B. When the content of the component B is less than 10 parts by weight, sufficient fluidity cannot be obtained, and when the content is more than 55 parts by weight, the impact resistance and heat resistance decrease.

(Component C: acrylic block copolymer)

The acrylic block copolymer used in the invention is not particularly limited as long as it is a copolymer having, as a main component, one or more polymer blocks obtained by polymerizing a monomer component containing methacrylic acid and a derivative thereof, an acrylic block copolymer containing a polymer block containing an acrylic ester monomer unit and a polymer block containing a methacrylic ester monomer unit is preferred, and an acrylic block copolymer in which the content of the polymer block containing a methacrylic ester monomer unit in the acrylic block copolymer is 25% by weight or more is more preferred. When the content is less than 25% by weight, the impact resistance may decrease. The content is more preferably 30% by weight or more, further preferably 35% by weight or more. The upper limit of the content is not particularly limited, but is preferably 60% by weight or less.

Examples of the acrylic ester monomer include acrylic acid esters such as methyl acrylate, ethyl acrylate, propyl acrylate, n-butyl acrylate, isobutyl acrylate, n-octyl acrylate, dodecyl acrylate, 2-ethylhexyl acrylate, stearyl acrylate,

phenyl acrylate, and dimethylaminoethyl acrylate.

Examples of the methacrylic ester monomer include methacrylic esters such as methyl methacrylate, ethyl methacrylate, propyl methacrylate, n-butyl methacrylate, t-butyl methacrylate, hexyl methacrylate, cyclohexyl methacrylate, octyl methacrylate, nonyl methacrylate, octadecyl methacrylate, dodecyl methacrylate, and 2-ethylhexyl methacrylate.

The content of the component C is 0.5 to 10 parts by weight, preferably 0.8 to 8 parts by weight, more preferably 1 to 6 parts by weight relative to 100 parts by weight of the resin component composed of the component A and the component B. When the content of the component C is less than 0.5 parts by weight, the impact resistance is not sufficiently improved, and when the content is more than 10 parts by weight, the appearance of the molded article deteriorates and the tape peeling strength also decreases.

(Component D: phosphorus antioxidant)

The phosphorus antioxidant used in the invention is not particularly limited, and examples thereof include phosphorous acid, phosphoric acid, phosphonous acid, phosphonic acid, and esters thereof, and tertiary phosphines. Such a phosphorus stabilizer can be used alone or in combination of two or more kinds. Examples of the phosphite compound include trialkyl phosphites such as tridecyl phosphite, dialkyl monoaryl phosphites such as didecyl monophenyl phosphite, monoalkyl diaryl phosphites such as monobutyl diphenyl phosphite, triaryl phosphites such as triphenyl phosphite and tris(2,4-di-tert-butylphenyl)phosphite, pentaerythritol phosphites such as distearyl pentaerythritol diphosphite, bis(2,4-di-tert-butylphenyl)pentaerythritol diphosphite, bis(2,4-dicumylphenyl)pentaerythritol diphosphite, and bis(2,6-di-tert-butyl-4-methylphenyl) pentaerythritol diphosphite, and cyclic phosphites such as 2,2-methylenebis(4,6-di-tert-butylphenyl)octyl phosphite and 2,2'-methylenebis(4,6-di-tert-butylphenyl)(2,4-di-tert-butylphenyl)phosphite. Examples of the phosphate compound include tributyl phosphate, trimethyl phosphate, tricresyl phosphate, triphenyl phosphate, triethyl phosphate, diphenyl cresyl phosphate, diphenyl monoorthoxenyl phosphate, tributoxyethyl phosphate, and diisopropyl phosphate, and the phosphate compound is preferably triphenyl phosphate or trimethyl phosphate. Preferred examples of the phosphonite compound include tetrakis(di-tert-butylphenyl)-biphenylene diphosphonite and bis(di-tert-butylphenyl)-phenyl-phenyl phosphonite, and tetrakis(2,4-di-tert-butylphenyl)-biphenylene diphosphonite and bis(2,4-di-tert-butylphenyl)-phenyl-phenyl phosphonite are more preferred. Such a phosphonite compound can be preferably used in combination with the phosphite compound having an aryl group substituted with two or more alkyl groups. Examples of the phosphonate compound include dimethyl benzenephosphonate, diethyl benzenephosphonate, and dipropyl benzenephosphonate. Examples of the tertiary phosphine include triphenylphosphine.

The content of the component D is 0.01 to 3.0 parts by weight, preferably 0.05 to 2.0 parts by weight, more preferably 0.1 to 1.0 part by weight relative to 100 parts by weight of the resin component composed of the component A and the component B. When the content of the component D is less than 0.01 parts by weight, the appearance of the molded article deteriorates and the tape peeling strength also decrease, and when the content is more than 3.0 parts by weight, the mold of the molding machine is contaminated, thereby deteriorating the appearance of the molded article.

(Component E: hindered phenol antioxidant)

The hindered phenol antioxidant used in the invention is not particularly limited, and various compounds that are usually blended in resins can be used. Examples of such a hindered phenol antioxidant include $\alpha$-tocopherol, butylhydroxytoluene, sinapyl alcohol, vitamin E, octadecyl-3-(3,5-di-tert-butyl-4-hydroxyphenyl)propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl)phenol, 3,5-di-tert-butyl-4-hydroxybenzyl phosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-$\alpha$-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3-(3-tert-butyl-4-hydroxy-5-methylphenyl)propionate, 1,6-hexanediolbis[3-(3,5-di-tert-butyl-4-hydroxyphenyl)propionate], bis[2-tert-butyl-4-methyl 6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butyl phenol), 4,4'-tri-thiobis(2,6-di-tertbutylphenol), 2,2-thiodiethylene-bis-[3-(3,5-di-tert-butyl-4-hydroxyphenyl)propionate], 2,4-bis(n-octylthio)-6-(4-hydroxy-3,5-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris 2[3(3,5-di-tert-butyl-4-hydroxyphenyl)propionyloxy]ethyl isocyanurate, tetrakis[methylene-3-(3,5-di-tert-butyl-4-hydroxyphenyl)propionate]methane, triethylene glycol-N-bis-3-(3-tert-butyl-4-hydroxy-5-methylphenyl)propionate, triethylene glycol-N-bis-3-(3-tert-butyl-4-hydroxy-5-methylphenyl)acetate, 3,9-bis[2-{3-(3-tert-butyl-4-hydroxy-5-methylphenyl)acetyloxy}-1,1-dimethylethyl]-2,4,8,10-tetraoxaspiro[5,5]undecane, tetrakis[methylene-3-(3-tert-butyl-4-hydroxy-5-methylphenyl)propionate]methane, 1,3,5-trimethyl-2,4,6-tris(3-tert-butyl-4-hydroxy-5-methylbenzyl)benzene, and tris(3-tert-butyl-4-hydroxy-5-methylbenzyl)isocyanurate. Among the above compounds, in the invention, tetrakis[methylene-3-(3-tert-butyl-4-hydroxy-5-methylphenyl)propionate]methane, octadecyl-3-(3,5-di-tert-butyl-4-hydroxyphenyl) propionate, and 3,9-bis[2-{3-(3-t-butyl-4-hydroxy-5-methylphenyl)propionyloxy}-1,1-dimethylethyl]-2,4,8,10-tetraoxaspiro[5,5]undecane are preferably used. In particular, 3,9-bis[2-{3-(3-t-butyl-4-hydroxy-5-methylphenyl)propionyloxy}-1,1-dimethylethyl]-2,4,8,10-tetraoxaspiro[5,5]undecane is preferred. The hindered phenol antioxidants can be used alone or in combination of two or more kinds.

The content of the component E is 0.01 to 3.0 parts by weight, preferably 0.05 to 2.0 parts by weight, more preferably 0.1 to 1.0 part by weight relative to 100 parts by weight of the resin component composed of the component A and the component B. When the content of the component E is less than 0.01 parts by weight, the appearance of the molded article deteriorates and the tape peeling strength also decrease, and when the content is more than 3.0 parts by weight, the mold of the molding machine is contaminated, thereby deteriorating the appearance of the molded article.

(Other components)

A heat stabilizer other than phosphorus and hindered phenol antioxidants, a release agent, an ultraviolet absorber, an impact modifier, a dye and pigment (carbon black, titanium oxide and the like) and the like can be blended into the resin composition of the invention.

(i) Heat stabilizer other than phosphorus and hindered phenol antioxidant

A heat stabilizer other than the phosphorus and hindered phenol antioxidants can be blended into the resin composition of the invention. Such a heat stabilizer is preferably used in combination with these antioxidants, and in particular, is preferably used in combination with both of an phosphorus antioxidant and a hindered phenol antioxidant. Suitable examples of such other heat stabilizers include a lactone stabilizer such as the reaction product of 3-hydroxy-5,7-di-tert-butyl-furan-2-one and o-xylene (details of such stabilizers are described in JPH07-233160A). Such a compound is commercially available as Irganox HP-136 (trademark, manufactured by CIBA SPECIALTY CHEMICALS), and this compounds can be used. Further, a stabilizer obtained by mixing the above compound, various phosphite compounds and hindered phenol compounds are commercially available. Suitable examples thereof include Irganox HP-2921 manufactured by the above company. Such a premixed stabilizer can be also utilized in the invention. The blending amount of the lactone stabilizer is preferably 0.0005 to 0.05 parts by weight, more preferably 0.001 to 0.03 parts by weight relative to 100 parts by weight of the resin component composed of the component A and the component B.

Examples of other stabilizers include sulfur-containing stabilizers such as pentaerythritol tetrakis(3-mercaptopropionate), pentaerythritol tetrakis(3-laurylthiopropionate), and glycerol-3-stearylthiopropionate. Such stabilizers are particularly effective when the resin composition is applied to rotational molding. The blending amount of such sulfur-containing stabilizers is preferably 0.001 to 0.1 parts by weight, more preferably 0.01 to 0.08 parts by weight relative to 100 parts by weight of the resin component composed of the component A and the component B.

(ii) Release agent

A release agent can be blended into the resin composition of the invention for the purpose of improving the productivity during molding and reducing distortion of the molded article as long as the effects of the invention is not impaired. As such a release agent, a known release agent can be used. Examples thereof include a saturated fatty acid ester, an unsaturated fatty acid ester, a silicone compound, a fluorine compound (for example, a fluorine oil such as polyfluoroalkyl ether), a paraffin wax, and a beeswax. Among these, examples of the preferred release agent include a fatty acid ester. Such a fatty acid ester is an ester between an aliphatic alcohol and an aliphatic carboxylic acid. Such an aliphatic alcohol can be a monohydric alcohol or a dihydric or higher polyhydric alcohol. The carbon number of the alcohol is in the range of 3 to 32, more suitably in the range of 5 to 30. Examples of such a monohydric alcohol include dodecanol, tetradecanol, hexadecanol, octadecanol, eicosanol, tetracosanol, seryl alcohol, and triacontanol. Examples of such a polyhydric alcohol include pentaerythritol, dipentaerythritol, tripentaerythritol, polyglycerol (triglycerol to hexaglycerol), ditrimethylolpropane, xylitol, sorbitol, and mannitol. In the fatty acid ester of the invention, a polyhydric alcohol is more preferred. Meanwhile, the aliphatic carboxylic acid preferably has 3 to 32 carbon atoms, and more preferably has 10 to 22 carbon atoms. Examples of the aliphatic carboxylic acid include saturated aliphatic carboxylic acids such as decanoic acid, undecanoic acid, dodecanoic acid, tridecanoic acid, tetradecanoic acid, pentadecanoic acid, hexadecanoic acid (palmitic acid), heptadecanoic acid, octadecanoic acid (stearic acid), nonadecanoic acid, behenic acid, icosanoic acid, and

docosanoic acid, and unsaturated aliphatic carboxylic acids such as palmitoleic acid, oleic acid, linoleic acid, linolenic acid, eicosenoic acid, eicosapentaenoic acid, and cetoleic acid. Among the above, the most preferred aliphatic carboxylic acids are those having 14 to 20 carbon atoms. Among these, saturated aliphatic carboxylic acids are preferred. Stearic acid and palmitic acid are particularly preferred. The aliphatic carboxylic acids such as stearic acid and palmitic acid are usually produced from natural fats and oils such as animal fats and oils such as beef tallow and lard, and vegetable fats and oils such as palm oil and sunflower oil, and therefore these aliphatic carboxylic acids are usually mixtures containing other carboxylic acid components having different carbon numbers. Thus, also in the production of the fatty acid ester of the invention, aliphatic carboxylic acids in particular, stearic acid and palmitic acid, which are produced from such natural fats and oils and are in the form of a mixture containing other carboxylic acid components, are preferably used. The fatty acid ester can be a partial ester or a full ester. However, a partial ester usually have a high hydroxyl value and is likely to induce decomposition of the resin at high temperatures, and thus a full ester is more suitable. The acid value of the fatty acid ester of the invention is preferably 20 or less, more preferably in the range of 4 to 20, further preferably in the range of 4 to 12 from the viewpoint of thermal stability. The acid value can be substantially zero. The hydroxyl value of the fatty acid ester is more preferably in the range of 0.1 to 30. Further, the iodine value is preferably 10 or less. The iodine value can be substantially zero. These properties can be determined by the method specified in JIS K 0070.

The content of the release agent is preferably 0.01 to 4.0 parts by weight, more preferably 0.05 to 3.0 parts by weight, further preferably 0.1 to 2.5 parts by weight relative to 100 parts by weight of the resin component composed of the component A and the component B.

(iii) Ultraviolet absorber

The resin composition of the invention can contain an ultraviolet absorber. Examples of the benzophenone system include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone, and 2-hydroxy-4-methoxy-2'-carboxybenzophenone. Examples of the benzotriazole system include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis [4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), 2-[2-hydroxy-3-(3,4,5,6-tetrahydrophthalimidomethyl)-5-methylphenyl]benzotriazole, and a polymer having a 2-hydroxyphenyl-2H-benzotriazole skeleton such as a copolymer of 2-(2'-hydroxy-5-methacryloxyethylphenyl)-2H-benzotriazole and a vinyl monomer copolymerizable with the monomer or a copolymer of 2-(2'-hydroxy-5-acryloxyethylphenyl)-2H-benzotriazole and a vinyl monomer copolymerizable with the monomer. Examples of the hydroxyphenyltriazine system include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol, and 2-(4,6-diphenyl-1,3,5-triazin-2-yl)-5-butyloxyphenol. Examples thereof further include a compound in which the phenyl group of the above-listed compounds is replaced with a 2,4-dimethylphenyl group such as 2-(4,6-bis(2,4-dimethylphenyl)-1,3,5-triazin-2-yl)-5-hexyloxyphenol. Examples of the cyclic imino ester system include 2,2'-p-phenylenebis(3,1-benzoxazin-4-one), 2,2'-(4,4'-diphenylene)bis(3,1-benzoxazin-4-one), and 2,2'-(2,6-naphthalene)bis(3,1-benzoxazin-4-one).

Examples of the cyanoacrylate system include 1,3-bis-[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

Further, the ultraviolet absorber can be a polymer-type ultraviolet absorber in which such an ultraviolet absorbing monomer and/or a light stable monomer having a hindered amine structure are copolymerized with a monomer such as an alkyl (meth)acrylate by the ultraviolet absorber having a structure of a monomer compound capable of radical polymerization. Suitable examples of the ultraviolet absorbing monomer include a compound containing a benzotriazole skeleton, a compound containing benzophenone skeleton, a compound containing triazine skeleton, a compound containing cyclic imino ester skeleton, and a compound containing cyanoacrylate skeleton in the ester substituent of the (meth)acrylic acid ester.

The content of the ultraviolet absorber is preferably 0.01 to 2.0 parts by weight, more preferably 0.02 to 1.5 parts by weight, further preferably 0.03 to 1.0 part by weight relative to 100 parts by weight of the resin component composed of the component A and the component B.

(iv) Other resins and elastomers

The resin composition of the invention can contain other resins or elastomers in a small percentage as long as the effects of the invention are exhibited. Examples of such other resins include resins such as a polypropylene resin, a polyethylene terephthalate resin, a polybutylene terephthalate resin, a polyamide resin, a polyimide resin, a polyetherimide resin, a polyurethane resin, a silicone resin, a polyphenylene ether resin, a polyphenylene sulfide resin, a polysulfone resin, a polymethacrylate resin, a phenol resin, and a fluororesin. Examples of elastomers include isobutylene/isoprene rubber, styrene/butadiene rubber, ethylene/propylene rubber, an acrylic elastomer, a polyester elastomer, a polyamide elastomer, MBS (methyl methacrylate/styrene/butadiene) rubber which is a core-shell elastomer, MB (methyl methacrylate/butadiene) rubber, and MAS (methyl methacrylate/acrylonitrile/styrene) rubber.

(v) Dye and pigment

The resin composition of the invention can further contain various dyes and pigments to provide a molded article that exhibits a wide variety of design properties. By blending a fluorescent whitening agent or a fluorescent dye other than a fluorescent whitening agent that emit light, an even better design effect can be imparted, taking advantage of the emitted light color. A resin composition that is colored with a very small amount of a dye and pigment and has vivid color development can be also provided.

Examples of the fluorescent dye (including fluorescent whitening agent) used in the invention include a coumarin fluorescent dye, a benzopyran fluorescent dye, a perylene fluorescent dye, an anthraquinone fluorescent dye, a thioindigo fluorescent dye, a xanthene fluorescent dye, a xanthone fluorescent dye, a thioxanthene fluorescent dye, a thioxanthone fluorescent dye, a thiazine fluorescent dye, and a diaminostilbene fluorescent dye. Among these, a coumarin fluorescent dye, a benzopyran fluorescent dye, and a perylene fluorescent dye, which have good heat resistance and are less likely to deteriorate during molding processing of the polycarbonate resin, are suitable.

Examples of the dye other than the above bluing agents and fluorescent dyes include a perylene dye, a coumarin dye, a thioindigo dye, an anthraquinone dye, a thioxanthone dye, a ferrocyanide such as Prussian blue, a perinone dye, a quinoline dye, a quinacridone dye, a dioxazine dye, an isoindolinone dye, and a phthalocyanine dye. Further, a metallic pigment can be blended into the resin composition of the invention to obtain a better metallic color. As the metallic pigment, those having a metal coating or a metal oxide coating on various plate-like fillers are suitable.

The content of the dye or pigment is preferably 0.00001 to 1 parts by weight, more preferably 0.00005 to 0.5 parts by weight relative to 100 parts by weight of the resin component composed of the component A and the component B.

(vi) Fire retardant

Various compounds conventionally known as fire retardants for thermoplastic resins, particularly polycarbonate resins, can be applied to the resin composition of the invention, but (i) a halogen fire retardant (for example, a brominated polycarbonate compound), (ii) a phosphorus fire retardant (for example, a monophosphate compound, a phosphate oligomer compound, a phosphonate oligomer compound, a phosphonitrile oligomer compound, a phosphonic acid amide compound, and a phosphazene compound), (iii) a metal salt fire retardant (for example, an organic alkali (earth) metal sulfonate, a metal borate fire retardant, and a metal stannate fire retardant), and (iv) a silicone fire retardant composed of a silicone compound are more suitable. The blending of a compound used as a fire retardant not only improves fire retardance, but also improves, for example, antistatic properties, fluidity, rigidity, and thermal stability depending on the properties of each compound.

The content of the fire retardant is preferably 0.01 to 30 parts by weight, more preferably 0.05 to 28 parts by weight, further preferably 0.08 to 25 parts by weight relative to 100 parts by weight of the resin component composed of the component A and the component B. When the content of the fire retardant is less than 0.01 parts by weight, sufficient fire retardance may not be obtained, and when the content is more than 30 parts by weight, mechanical properties may be significantly decreased.

(vii) Highly light-reflective white pigment

A highly light-reflective white pigment can be blended into the resin composition of the invention to impart a light-reflective effect. Examples of such a white pigment include zinc sulfide, zinc oxide, barium sulfate, calcium carbonate, and calcined kaolin. The content of such a highly light-reflective white pigment is preferably 1 to 30 parts by weight, more preferably 3 to 25 parts by weight relative to 100 parts by weight of the resin component composed of the component A and the component B. Two or more kinds of highly light-reflective white pigments can be used in combination.

(viii) Other additives

In addition, additives known per se can be blended into the resin composition of the invention in a small percentage to impart various functions to the molded article or to improve the properties. The blending amount of these additives is a usual amount as long as the object of the invention is not impaired. Examples of such additives include a sliding agent (for example, PTFE particles), a colorant (for example, a pigment such as carbon black, a dye), a light diffusing agent (for example, an acrylic crosslinked particle, a silicon crosslinked particle, an extremely thin glass flake, a calcium carbonate particle), a fluorescent dye, an inorganic phosphor (for example, a phosphor having an aluminate as a host crystal), an antistatic agent, a crystal nucleating agent, inorganic and organic antibacterial agents, a photocatalytic antifouling agent (for example, fine particle titanium oxide, fine particle zinc oxide), a radical generator, an infrared absorbing agent (a heat ray absorbing agent), and a photochromic agent.

(Method for preparing resin composition)

The resin composition of the invention is prepared by mixing the above components simultaneously or in any order with a mixer such as a tumbler, a V-type blender, a Nauter mixer, a Banbury mixer, a kneading roll, or an extruder. As the mixer, melt kneading with a twin-screw extruder is preferred, and any component is preferably fed into other melt-mixed components from a second feed port using a side feeder or the like, if necessary. The resin extruded as described above is directly cut and pelletized, or pelletized by being formed into a strand, which is then cut with a pelletizer. When the influence of external dust or the like during pelletization needs to be reduced, the atmosphere around the extruder is preferably clarified. The shape of the obtained pellet can be any of usual shapes such as a cylinder, a prism, and a spherical shape, but is more suitably a cylinder. The diameter of such a cylinder is preferably 1 to 5 mm, more preferably 1.5 to 4 mm, further preferably 2 to 3.5 mm. Meanwhile, the length of the cylinder is preferably 1 to 30 mm, more preferably 2 to 5 mm, further preferably 2.5 to 4 mm.

(Regarding the molded article made of the resin composition of the invention)

From the resin composition of the invention, various products can be produced usually by injection molding the pellet obtained by the above method. In such injection molding, an molded article can be obtained using not only usual molding methods but also injection molding methods, as appropriate for the purpose, such as injection compression molding, injection press molding, gas-assisted injection molding, foam molding (including injection of supercritical fluids), insert molding, in-mold coating molding, heat-insulating mold molding, rapid heating and cooling mold molding, two-color molding, sandwich molding, and ultra-high speed injection molding. The advantages of these various molding methods are already widely known. The molding can be performed using the cold runner method or the hot runner method.

The embodiment performed by the present inventors is a summary of the preferred range of each of the above requirements, and typical examples thereof are described in the following Examples. The invention is of course not limited to these embodiments.

Examples

The invention will be described in more detail below with reference to Examples. Hereinafter, unless otherwise specified, "parts" means "parts by weight", and "%" means "% by weight".

(1) Production of resin composition

(1-1) Raw material used

(Component A)

A-1: Polycarbonate resin powder having a molecular weight of 19,800 obtained by the following method:
A three-stage six-blade stirrer and a reflux condenser were attached to a baffled reaction vessel. Into this reaction vessel were placed 45.6 parts of bisphenol A, 2.78% by mol of p-tert-butylphenol relative to bisphenol A, 265 parts of dichloromethane, and 200 parts of water, and a nitrogen purge was performed to remove oxygen inside the reaction vessel. At this stage, the content in the reaction vessel took up slightly less than 80% of the vessel capacity. Then, to the above suspension, about 80 parts of an aqueous solution for feeding 0.09 parts of sodium hydrosulfite and 21.8 parts of sodium hydroxide was fed, and bisphenol A was dissolved at 15°C. To this mixture was fed 23.35 parts of phosgene over 30 minutes while stirring. Then, 0.016 parts of triethylamine (0.08% by mol relative to bisphenol A) was added and the mixture was stirred for 60 minutes to terminate the reaction. Then, the reaction mixture was allowed to stand, and the organic phase

was separated. Methylene chloride was added to the obtained polycarbonate resin in dichloromethane to give a solution having a concentration of 14% by weight, further, using a centrifugal extractor with a perforated plate (KCC centrifugal extractor manufactured by Kawasaki Engineering co.,ltd.), 0.5% aqueous sodium hydroxide solution was fed at a flow rate of 1,000 ml/min, the organic phase was supplied at a flow rate of 1,000 ml/min, the processing was performed under the condition of 3,500 rpm, then the organic phase was acidified with hydrochloric acid, then washing with water was repeated, and when the conductivity of the aqueous phase became almost the same as that of ion-exchanged water, the methylene chloride was evaporated to obtain a polycarbonate resin powder.

(Component B)

B-1: ABS resin (MAGNUM A371 manufactured by TRISEO HOLDINGS ASIA PTE. LTD.)

(Component C)

C-1: Acrylic block copolymer containing a polymer block containing an acrylic ester monomer unit and a polymer block containing a methacrylic ester monomer unit (content of the polymer block containing a methacrylic ester monomer unit in the acrylic block copolymer: 50% by weight, KURARITY LA4285, manufactured by KURARAY CO., LTD.)
C-2: Acrylic block copolymer containing a polymer block containing an acrylic ester monomer unit and a polymer block containing a methacrylic ester monomer unit (content of the polymer block containing a methacrylic ester monomer unit in the acrylic block copolymer: 40% by weight, KURARITY LA2270, manufactured by KURARAY CO., LTD.)
C-3: Acrylic block copolymer containing a polymer block containing an acrylic ester monomer unit and a polymer block containing a methacrylic ester monomer unit (content of the polymer block containing a methacrylic ester monomer unit in the acrylic block copolymer: 30% by weight, KURARITY LA2250, manufactured by KURARAY CO., LTD.)
C-4: Acrylic block copolymer containing a polymer block containing an acrylic ester monomer unit and a polymer block containing a methacrylic ester monomer unit (content of the polymer block containing a methacrylic ester monomer unit in the acrylic block copolymer: 20% by weight, KURARITY LA2140, manufactured by KURARAY CO., LTD.)

(Component D)

D-1: Phosphorus antioxidant (Adekastab 2112, manufactured by ADEKA CORPORATION)

(Component E)

E-1: Hindered phenol antioxidant (Adekastab AO-50, manufactured by ADEKA CORPORATION)

(Other components)

F-1: Release agent (fatty acid ester, Rikestar EW-400, manufactured by RIKEN VITAMIN CO., LTD.)
F-2: Carbon black (ROYAL BLACK RB90003S, manufactured by KOSHIGAYA KASEI CO.,LTD)

(2) Production of specimen

(2-1) Production of resin composition

The components shown in Table 1 were mixed in the percentages shown, and the mixture was fed from the first feed port of the extruder. The mixture was obtained by mixing with a V-type blender. For the extrusion, melt kneading was performed at a screw rotation speed of 230 rpm, a discharge rate of 25 kg/h, and a vent vacuum of 3 kPa using a vented twin screw extruder with a diameter of 30 mmφ (TEX30α-38.5BW-3V, manufactured by The Japan Steel Works, LTD.) to obtain a pellet. The extrusion temperature was 260°C from the first feed port to the die part.

(2-2) Method for producing specimen for measuring Charpy impact strength and evaluating heat resistance

The obtained pellet was dried in a circulating hot air dryer at 110°C for 6 hours, and then molded into an ISO bending specimen with an injection molding machine [EC130XII-4Y, manufactured by TOSHIBA MACHINE CO., LTD.]

under conditions of a cylinder temperature of 260°C and a mold temperature of 70°C.

(2-3) Method for producing specimen for evaluating appearance of molded article and evaluating tape peeling

The obtained pellet was dried in a circulating hot air dryer at 110°C for 6 hours, and then molded into a plate with a width of 100 mm, a length of 100 mm, and a thickness of 2 mm with an injection molding machine [EC130XII-4Y, manufactured by TOSHIBA MACHINE CO., LTD.] under conditions of a cylinder temperature of 280°C and a mold temperature of 70°C.

(3) Evaluation item

The following items were evaluated. The results are shown in Table 1.

(3-1) Charpy impact strength

Using the ISO bending specimen obtained by the above method, the notched Charpy impact strength was measured in accordance with ISO179 under the atmosphere of a temperature of 23°C and a relative humidity of 50% RH. The resin composition of the invention needs to have a Charpy impact strength of 60 kJ/$m^2$ or more.

(3-2) Appearance of molded article

The appearance of the plate with a width of 100 mm, a length of 100 mm, and a thickness of 2 mm produced and obtained by the above method was visually evaluated. The evaluation was performed according to the following criteria. The resin composition of the invention needs to be rated as "A"

A: Poor appearance was not observed.
B: Poor appearance such as whitening or silvering of the molded article occurred.

(3-3) Tape peeling

On the surface of the plate with a width of 100 mm, a length of 100 mm, and a thickness of 2 mm produced and obtained by the above method, 11 straight cuts were made at 1 mm intervals using a cutter knife (a cutter knife (product name) A Plus (for stationery only) manufactured by OLFA CORPORATION), and then 11 more cuts were made at right angles by 90 degrees to create 100 squares of 1 mm square cuts. Cellophane tape (Cellotape (registered trademark) CT-15, manufactured by NICHIBAN Co., Ltd.) was applied to the created squares and pressed with a finger to ensure adhesion, then an end of the tape was forcefully peeled off at a 90° angle, and the state of peeling of the sample to the cellophane tape was visually evaluated. The evaluation was performed according to the following criteria.

A: No peeling is observed.
B: Peeling is observed.

(3-4) Heat resistance

Using the ISO bending specimen obtained by the above method, the deflection temperature under load (HDT) was measured in accordance with ISO 75-1.2 with a HDT/VICAT tester [Heat Distortion Tester 6M-2 manufactured by Toyo Seiki Seisaku-sho] under the condition of a load of 1.8 MPa.

(3-5) Fluidity

The obtained pellet was dried in a circulating hot air dryer at 110°C for 6 hours, and then the melt volume rate (MVR) was measured with a semi-automatic melt indexer [Semi-automatic melt indexer 2A manufactured by Toyo Seiki Seisaku-sho] under the conditions of a temperature of 250°C and a load of 5000 g.

[Table 1]

| Item | | | Unit | Examples | | | | | | | | | |
|---|---|---|---|---|---|---|---|---|---|---|---|---|---|
| | | | | 1 | 2 | 3 | 4 | 5 | 6 | 7 | 8 | 9 | 10 |
| Composition | Component A | A-1 | Parts by weight | 90 | 45 | 60 | 60 | 60 | 60 | 60 | 60 | 60 | 60 |
| | Component B | B-1 | " | 10 | 55 | 40 | 40 | 40 | 40 | 40 | 40 | 40 | 40 |
| | Component A + Component B | | " | 100 | 100 | 100 | 100 | 100 | 100 | 100 | 100 | 100 | 100 |
| | Component C | C-1 | " | | | | 2.0 | | | | | | |
| | | C-2 | " | 2.0 | 2.0 | 2.0 | | | | 0.5 | 0.8 | 8.0 | 10.0 |
| | | C-3 | " | | | | | 2.0 | | | | | |
| | | C-4 | " | | | | | | 2.0 | | | | |
| | Component D | D-1 | " | 0.10 | 0.10 | 0.10 | 0.10 | 0.10 | 0.10 | 0.01 | 0.10 | 0.10 | 0.10 |
| | Component E | E-1 | " | 0.10 | 0.10 | 0.10 | 0.10 | 0.10 | 0.10 | 0.10 | 0.10 | 0.10 | 0.10 |
| | Others | F-1 | " | 0.30 | 0.30 | 0.30 | 0.30 | 0.30 | 0.30 | 0.30 | 0.30 | 0.30 | 0.30 |
| | | F-2 | " | 0.80 | 0.80 | 0.80 | 0.80 | 0.80 | 0.80 | 0.80 | 0.80 | 0.80 | 0.80 |
| Evaluation result | Charpy impact strength | | $kJ/m^2$ | 120 | 75 | 115 | 118 | 112 | 110 | 80 | 100 | 118 | 120 |
| | Appearance of molded article | | - | A | A | A | A | A | A | A | A | A | A |
| | Tape peeling | | - | A | A | A | A | A | A | A | A | A | A |
| | Heat resistance (HDT) | | °C | 121 | 90 | 104 | 103 | 104 | 105 | 105 | 105 | 104 | 104 |
| | Fluidity (MVR) | | $cm^3$/10 min | 12 | 18 | 16 | 16 | 16 | 16 | 14 | 14 | 18 | 22 |

[Table 1] (Continued)

| Item | | | Unit | Examples | | | | |
|---|---|---|---|---|---|---|---|---|
| | | | | 11 | 12 | 13 | 14 | 15 |
| Composition | Component A | A-1 | Parts by weight | 60 | 60 | 60 | 60 | 60 |
| | Component B | B-1 | " | 40 | 40 | 40 | 40 | 40 |
| | Component A + Component B | | " | 100 | 100 | 100 | 100 | 100 |
| | Component C | C-1 | " | | | | | |
| | | C-2 | " | 2.0 | 2.0 | 2.0 | 2.0 | 2.0 |
| | | C-3 | " | | | | | |
| | | C-4 | " | | | | | |
| | Component D | D-1 | " | 0.01 | 3.00 | 0.10 | 0.10 | 0.10 |
| | Component E | E-1 | " | 0.10 | 1.00 | 0.01 | 3.00 | 3.00 |
| | Others | F-1 | " | 0.30 | 0.30 | 0.30 | 0.30 | |
| | | F-2 | " | 0.80 | 0.80 | 0.80 | 0.80 | |

(continued)

| Item | | Unit | Examples | | | | |
|---|---|---|---|---|---|---|---|
| | | | 11 | 12 | 13 | 14 | 15 |
| Evaluation result | Charpy impact strength | $kJ/m^2$ | 115 | 115 | 115 | 115 | 115 |
| | Appearance of molded article | - | A | A | A | A | A |
| | Tape peeling | - | A | A | A | A | A |
| | Heat resistance (HDT) | °C | 105 | 104 | 104 | 104 | 104 |
| | Fluidity (MVR) | $cm^3$/10 min | 12 | 12 | 12 | 12 | 12 |

[Table 1] (Continued)

| Item | | | Unit | Comparative Examples | | | | | | | |
|---|---|---|---|---|---|---|---|---|---|---|---|
| | | | | 1 | 2 | 3 | 4 | 5 | 6 | 7 | 8 |
| Composition | Component A | A-1 | Parts by weight | 60 | 60 | 60 | 60 | 95 | 40 | 60 | 60 |
| | Component B | B-1 | " | 40 | 40 | 40 | 40 | 5 | 60 | 40 | 40 |
| | Component A + Component B | | " | 100 | 100 | 100 | 100 | 100 | 100 | 100 | 100 |
| | Component C | C-1 | " | | | | | | | | |
| | | C-2 | " | | 12.0 | 2.0 | 2.0 | 2.0 | 2.0 | 2.0 | 2.0 |
| | | C-3 | " | | | | | | | | |
| | | C-4 | " | | | | | | | | |
| | Component D | D-1 | " | 0.10 | 0.10 | | 0.10 | 0.10 | 0.10 | 3.50 | 0.10 |
| | Component E | E-1 | " | 0.10 | 0.10 | 0.10 | | 0.10 | 0.10 | 0.10 | 3.50 |
| | Others | F-1 | " | 0.30 | 0.30 | 0.30 | 0.30 | 0.30 | 0.30 | 0.30 | 0.30 |
| | | F-2 | " | 0.80 | 0.80 | 0.80 | 0.80 | 0.80 | 0.80 | 0.80 | 0.80 |
| Evaluation result | Charpy impact strength | | $kJ/m^2$ | 45 | 122 | 113 | 113 | 123 | 55 | 111 | 111 |
| | Appearance of molded article | | - | A | B | B | B | A | A | B | B |
| | Tape peeling | | - | A | B | B | B | A | A | A | A |
| | Heat resistance (HDT) | | °C | 105 | 103 | 104 | 104 | 122 | 86 | 102 | 102 |
| | Fluidity (MVR) | | $cm^3$/10 min | 11 | 23 | 15 | 15 | 10 | 20 | 15 | 15 |

## Claims

1. A resin composition, comprising: 0.5 to 10 parts by weight of (C) an acrylic block copolymer (component C); 0.01 to 3.0 parts by weight of (D) a phosphorus antioxidant (component D); and 0.01 to 3.0 parts by weight of (E) a hindered phenol antioxidant (component E) relative to 100 parts by weight of a resin component composed of 45 to 90 parts by weight of (A) a polycarbonate resin (component A) and 10 to 55 parts by weight of (B) a copolymer obtained by polymerizing an aromatic vinyl monomer and a vinyl cyanide monomer (component B).

2. The resin composition according to claim 1, wherein the component C is an acrylic block copolymer containing a

polymer block containing an acrylic ester monomer unit and a polymer block containing a methacrylic ester monomer unit.

**3.** The resin composition according to claim 2, wherein a content of the polymer block containing a methacrylic ester monomer unit in the component C is 25% by weight or more in all blocks.

**4.** The resin composition according to claim 1 or 2, wherein the component B is an ABS resin.

**5.** A molded article made of the resin composition according to claim 1 or 2.

**6.** The molded article according to claim 5, which is an automobile part.

**INTERNATIONAL SEARCH REPORT**

International application No.
**PCT/JP2023/030245**

**A. CLASSIFICATION OF SUBJECT MATTER**

***C08L 69/00***(2006.01)i; ***C08K 5/13***(2006.01)i; ***C08K 5/49***(2006.01)i; ***C08L 25/12***(2006.01)i; ***C08L 53/00***(2006.01)i; ***C08L 55/02***(2006.01)i
FI: C08L69/00; C08L25/12; C08L53/00; C08K5/49; C08L55/02; C08K5/13

According to International Patent Classification (IPC) or to both national classification and IPC

**B. FIELDS SEARCHED**

Minimum documentation searched (classification system followed by classification symbols)

C08L69/00; C08K5/13-5/138; C08K5/49-5/5399; C08L25/12; C08L53/00; C08L55/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-116562 A (CANON KABUSHIKI KAISHA) 18 July 2019 (2019-07-18) | 1-6 |
| A | CN 105462224 A (JIANGSU KINGFA NEW MATERIAL CO., LTD.) 06 April 2016 (2016-04-06) | 1-6 |
| A | JP 2004-168822 A (TEIJIN CHEMICALS LTD.) 17 June 2004 (2004-06-17) | 1-6 |
| A | JP 2016-65141 A (FUJI XEROX CO., LTD.) 28 April 2016 (2016-04-28) | 1-6 |
| A | CN 106854353 A (SHANGHAI KUMHO SUNNY PLASTICS CO., LTD.) 16 June 2017 (2017-06-16) | 1-6 |
| A | JP 2016-50297 A (FUJI XEROX CO., LTD.) 11 April 2016 (2016-04-11) | 1-6 |
| A | WO 2020/075655 A1 (KURARAY CO., LTD.) 16 April 2020 (2020-04-16) | 1-6 |
| A | WO 2002/092696 A1 (KANEGAFUCHI CHEM IND CO., LTD.) 21 November 2002 (2002-11-21) | 1-6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/030245**

**C. DOCUMENTS CONSIDERED TO BE RELEVANT**

| Category* | Citation of document, with indication, where appropriate, of the relevant passages | Relevant to claim No. |
|---|---|---|
| A | JP 2000-154329 A (KANEGAFUCHI CHEM IND CO., LTD.) 06 June 2000 (2000-06-06) | 1-6 |

Form PCT/ISA/210 (second sheet) (January 2015)

**INTERNATIONAL SEARCH REPORT**
**Information on patent family members**

International application No.
**PCT/JP2023/030245**

| Patent document cited in search report | | | Publication date (day/month/year) | Patent family member(s) | | | Publication date (day/month/year) |
|---|---|---|---|---|---|---|---|
| JP | 2019-116562 | A | 18 July 2019 | US | 2019/0194446 | A1 | |
| | | | | CN | 109971145 | A | |
| CN | 105462224 | A | 06 April 2016 | (Family: none) | | | |
| JP | 2004-168822 | A | 17 June 2004 | (Family: none) | | | |
| JP | 2016-65141 | A | 28 April 2016 | US | 2016/0083577 | A1 | |
| CN | 106854353 | A | 16 June 2017 | (Family: none) | | | |
| JP | 2016-50297 | A | 11 April 2016 | US | 2016/0060456 | A1 | |
| | | | | CN | 106032430 | A | |
| WO | 2020/075655 | A1 | 16 April 2020 | US | 2021/0347931 | A1 | |
| | | | | EP | 3865541 | A1 | |
| | | | | CN | 112805331 | A | |
| | | | | KR | 10-2021-0071991 | A | |
| | | | | CA | 3115601 | A1 | |
| | | | | TW | 202028269 | A | |
| WO | 2002/092696 | A1 | 21 November 2002 | JP | 4219899 | B2 | |
| | | | | US | 2004/0147674 | A1 | |
| | | | | EP | 1398353 | A1 | |
| | | | | BR | 209616 | A | |
| | | | | TW | 589345 | B | |
| | | | | CN | 1509318 | A | |
| | | | | CN | 101016400 | A | |
| JP | 2000-154329 | A | 06 June 2000 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009203269 A
- JP 2020164774 A
- JP H06172508 A
- JP H0827370 A
- JP 2001055435 A
- JP 2002117580 A
- JP H07233160 A